# EUROPEAN PATENT APPLICATION

(11) **EP 4 539 239 A1**
(43) Date of publication of application: **16.04.2025**
(21) Application number: 23203301.9
(22) Date of filing: 12.10.2023
(51) Int. Cl.: H01M 50/503, H01M 50/505, H01M 10/6553, H01M 10/613, H01M 10/6556

(54) **BUSBAR CONNECTOR AND METHOD FOR PROVIDING A BUSBAR CONNECTOR**

(71) Applicant: Röchling Automotive SE, 68165 Mannheim (DE)
(72) Inventor: Boninsegna, Alessandro, 38035 Moena (IT); Martini, Francesco, 38122 Trento (IT); Gusmerotti, Daniele, 38017 Mezzolombardo (IT); Wencke, Yannick, 49808 Lingen (DE); Civetta, Fabrizio, 39040 Montagna (IT); Girardi, Saverio, 38123 Trento (IT); Waid, Helmuth, 39052 Caldaro (IT)
(74) Representative: Ullrich & Naumann PartG mbB

(57) **Abstract**

The invention relates to a busbar connector for providing one or more electrical connections within or to a battery module or a battery pack, the battery module or battery pack comprising one or more battery cells, wherein the busbar connector comprises:
- at least one electric connector for electrically contacting one or more battery cells,
- an electrically insulating material at least partly surrounding said electric connector, and
- at least one thermal management channel for thermal management of at least one battery cell and/or of said at least one electric connector,
and wherein said at least one thermal management channel is
c) co-extruded with said electrically insulating material and/or said at least one electric connector and/or
d) provided by a fluid injection technique and/or projectile injection technique.

## Description

The invention relates to a busbar connector for providing one or more electrical connections within or to a battery module or a battery pack, the battery module or battery pack comprising one or more battery cells.

The invention further relates to a method for providing a busbar connector for providing one or more electrical connections within or to a battery module or a battery pack, the battery module or battery pack comprising one or more battery cells.

The invention even further relates to a connection system comprising a busbar connector and a thermal management system for thermal management of at least said busbar connector.

The invention even further relates to a battery comprising a plurality of battery cells and a busbar connector and/or a connection system.

Further, the invention relates to a method for operating a connection system.

Motor vehicles, when powered by one or more electric motors, comprise one or batteries for providing electric power to the electric motors and to on-board electrical systems. Typically, a battery comprises a series of battery modules, wherein each module itself comprises a plurality of battery cells. To provide the required power for the electric motor and the on-board systems the battery cells are connected via a busbar connector.

For instance, a busbar connector is known from US 11,502,377 B2. US 11,502,377 B2 shows a busbar connector for making one or more electrical connections within or to a battery module of a battery pack, the battery module comprising one or more battery cells, wherein the busbar connector comprises: a base portion for forming an electrical connection to one or more of the battery cells within the module; and at least one connector portion for forming an electrical connection from the base portion to one or more other components of the module or the battery pack. Further, an elongate strip-like or panel-like heat exchanger device to facilitate heat transfer out of or away from the cells of each battery module during use may be provided. The heat exchanger device comprises a generally somewhat flat or planar body of thermally conductive material, e.g. aluminum or an aluminum alloy, which has been coated on at least its underside surface with an electrically insulating coating. The body, forming the basic structure of the heat exchanger device, comprises a network or array or system of conduits or channels formed internally there within for flow there through of an appropriate thermal transfer fluid, e.g. a cooling or heating liquid.

One of the disadvantages however is that an inefficient thermal management of the battery cells or the busbar connector is provided with non-contact areas or at least reduced contact areas in which the heat exchanger device is not in direct contact with a surface of the battery cell or the busbar connector. A further disadvantage is that due to elongated structure, i.e. long cooling channels, cooling is ineffective due to heat collection from the different battery cells or the busbar connector.

One of the objectives of the present invention is therefore to provide a busbar connector, a method for providing a busbar connector, a connection system, a battery and a method for operating a connection system, which enable an efficient thermal management, a simple and easy manufacture while providing a high integration level and a reduced weight.

One of the further objectives of the present invention is to provide an alternative busbar connector, an alternative method for providing a busbar connector, an alternative connection system, an alternative battery and an alternative method for operating a connection system.

The above-mentioned objectives may be solved by a busbar connector for providing one or more electrical connections within or to a battery module or a battery pack, the battery module or battery pack comprising one or more battery cells, wherein the busbar connector comprises:
- at least one electric connector for electrically contacting one or more battery cells,
- an electrically insulating material at least partly surrounding said electric connector, and
- at least one thermal management channel for thermal management of at least one battery cell and/or of said at least one electric connector,
and wherein said at least one thermal management channel is
a) co-extruded with said electrically insulating material and/or said at least one electric connector and/or
b) provided by a fluid injection technique and/or projectile injection technique, PIT.

The above-mentioned objectives may also be solved by a method for providing a busbar connector for providing one or more electrical connections within or to a battery module or a battery pack, the battery module or battery pack comprising one or more battery cells, said method comprising:
- Providing at least one electric connector for electrically contacting one or more battery cells,
- Providing an electrically insulating material at least partly surrounding said electric connector,
- Providing at least one thermal management channel for thermal management of at least one battery cell and/or of said at least one electric connector,
   a) by co-extruding said at least one thermal management channel with said electrically insulating material and/or said electric connector, and/or
   b) by fluid injection technique, in particular gas injection technique, GIT, and/or water injection technique, WIT, and/or by projectile injection technique, PIT.

The above-mentioned objectives may also be solved by a connection system comprising a busbar connector according to one of the claims 1-11 and a thermal management system for thermal management of at least said busbar connector, wherein said thermal management system is adapted to provide a cooling fluid and/or a heating fluid to said at least one thermal management channel.

The above-mentioned objectives may also be solved by a battery comprising a plurality of battery cells and a busbar connector according to one of the claims 1-11 and/or a connection system according to claim 13.

The above-mentioned objectives may also be solved by a method for operating a connection system according to claim 13, comprising the steps of:
- Determining a cooling and/or heating requirement by the thermal management system for said busbar connector,
- Determining a volume and/or flow rate and/or temperature of a cooling and/or heating fluid,
- Providing said cooling and/or heating fluid to said at least one thermal management channel of said busbar connector.

The busbar connector according to the invention comprises at least one thermal management channel. In particular one thermal management channel provides a small design and low production costs.

One of the advantages that may be achieved by the present invention is that an efficient thermal management is enabled. A further advantage may be that a simple and cost-effective manufacture while providing a high integration level and a reduced weight can be provided.

Further features, advantages and preferred embodiments are disclosed or may become apparent in the following.

According to a preferred embodiment, said busbar connector is an elongated element along a main direction of extension. This may allow for a covering and easy connecting a plurality of battery cells while providing an efficient cooling of the busbar connector and/or the battery cells.

According to a further preferred embodiment, at least two separate thermal management channels are provided extending along said main direction of extension of the busbar connector. This provides a more efficient thermal management and allows for instance a cooling liquid flowing in the separate thermal management channels in opposite directions.

According to a further preferred embodiment, said at least two separate thermal management channels are spaced apart from each other with a distance, in particular perpendicular to a main direction of extension of the busbar connector. This reduces a thermal coupling between the separate thermal management channels, thus enabling a more efficient heating or cooling.

According to a further preferred embodiment, said at least one thermal management channel of said at least one electric connector has a rectangular, ellipsoidal, trapezoidal and/or circular cross-section. This enhances the flexibility according to different requirements for an efficient thermal management, in particular the channels can be adapted such to provide an efficient flow of a thermal management fluid for heating or cooling. Even further, the thermal management channel can be easily manufactured while being cost-effective.

According to a further preferred embodiment, said at least one electric connector comprises a portion, which extends with an angle >0°, preferably perpendicular to the main direction of extension of the busbar connector. This allows for an easy connection of a plurality of battery cells via the busbar connector. For instance, the electric connector can have a generally L-shaped form.

According to a further preferred embodiment, said portion comprises a plurality of connection elements for electrically connecting one or more battery cells. This enables to contact the different battery cells in an easy way.

According to a further preferred embodiment, at least one of said connection elements is flat, in particular having a connecting portion for contacting a pole of a battery cell. This allows for a sufficient structural strength while allowing a certain flexibility due to movement of the battery cells, which in consequence enhances the electrical connection between the battery cells and the busbar.

According to a further preferred embodiment, said at least one thermal management channel comprises a meander-shaped surface, such that in one spatial direction the distance between said at least one electric connector and said thermal management channel varies, preferably periodically. This allows a thermal management of the busbar connector as well as of for instance cylindrical shaped battery cells on the circumferential surface, providing a more efficient thermal management of the battery cells than via the upper and lower, i.e. top or bottom, planar surfaces of the battery cells, in particular of the poles of the battery cells. In some types of battery cells, the poles are both in the upper side and can be cooled by the bottom.

According to a further preferred embodiment, the number of thermal management channels is equal or smaller than the number of connection elements. This allows for a cost-effective production of the busbar connector.

According to a further preferred embodiment, said at least one thermal management channel comprises one or more dividers for guiding the flow of a thermal management fluid. This allows for an efficient guiding of a thermal management fluid along the thermal management channel. For instance, local turbulences are avoided.

There are several ways how to design and further develop the teaching of the present invention in an advantageous way. To this end, it is to be referred to the patent claims subordinate to the independent claims on the one hand and to the following explanation of further embodiments of the invention by way of example, illustrated by the figures on the other hand. In connection with the explanation of the further embodiments of the invention by the aid of the figures, generally further embodiments and further developments of the teaching will be explained.

In the drawings
- Fig. 1: shows a busbar connector according to an embodiment of the present invention;
- Fig. 2: shows a busbar connector according to an embodiment of the present invention;
- Fig. 3: shows a busbar connector according to an embodiment of the present invention;
- Fig. 4: shows a busbar connector according to an embodiment of the present invention;
- Fig. 5: shows a battery according to an embodiment of the present invention;
- Fig. 6: shows steps of a method according to an embodiment of the present invention; and
- Fig. 7: shows steps of a method according to an embodiment of the present invention.

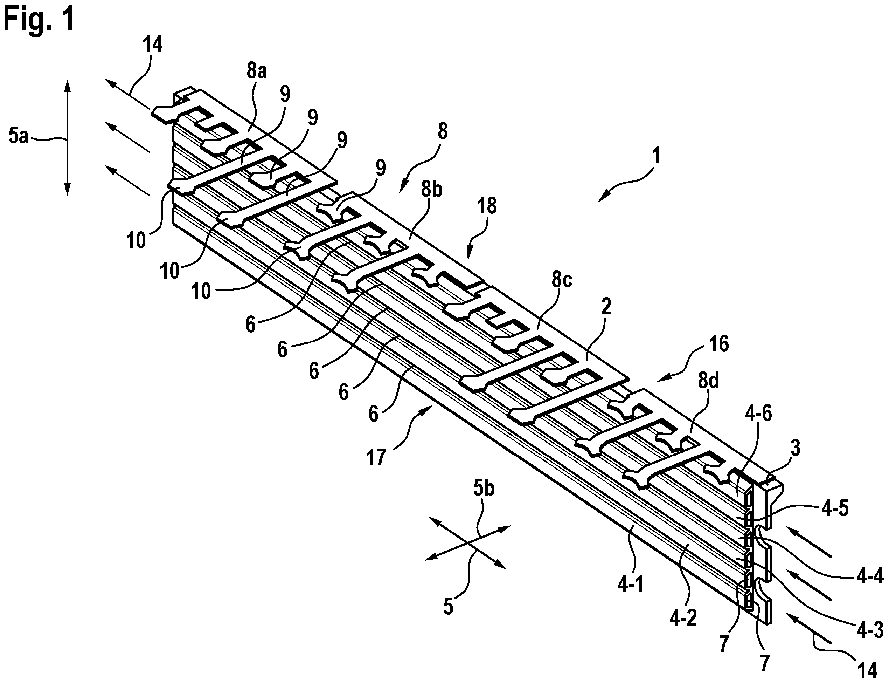

Figure 1 shows a busbar connector according to an embodiment of the present invention.

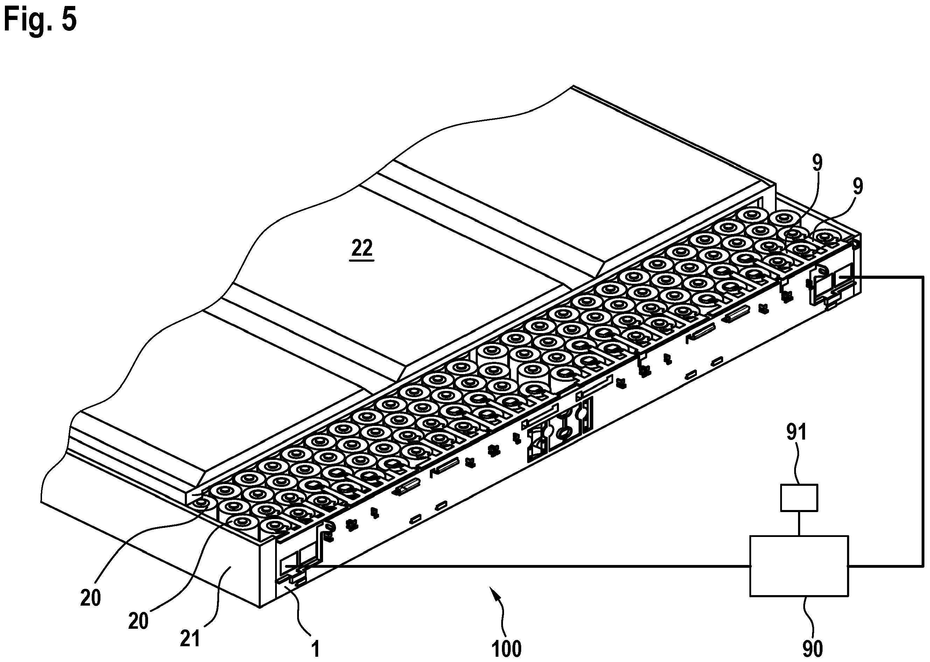

In figure 1, a busbar connector 1 is shown. The busbar connector 1 is provided in form of an elongated flat rectangular element having a main direction of extension 5, i.e. length, and a height 5a perpendicular the main direction of extension 5. The busbar conector 1 further comprises an electric connector 2, which is partially surrounded with electrically insulating material 3. The electric connector 2 is arranged on or forms a backside 16 of the busbar connector 1 and extends up to the upper side 18 - in figure 1 on the upper end of the busbar connector 1. On the upper surface 18, the busbar connector 1 comprises a portion 8 extending perpendicular to the main directions of extensions 5, 5a, i.e. parallel to a direction 5b. The portion 8 itself comprises a plurality of flat or band-like connecting elements 9 each comprising connecting portions 10 for connecting the busbar connector 1 to the poles of the different battery cells 20 (see figure 5). The connecting elements 9 have different lengths parallel to the direction 5b and/or different shapes of the connecting portions 10 for contacting poles of different battery cells 20. A plurality of connecting elements 9 - in figure 1 five connecting elements 9 - are each connected to a common base 8a, 8b, 8c, 8d, which in turn is each connected or part of the electric connector 2.

On a frontside 17 of the busbar connector 1 and parallel to the main direction of extension 5, a plurality of cooling channels 4-1, 4-2, 4-3, 4-4, 4-5, 4-6 are provided each having a trapezoidal cross-section 7. The cooling channels 4-1, 4-2, 4-3, 4-4, 4-5, 4-6 are arranged parallel to each other along direction 5a, i.e. the cooling channels 4-1, 4-2, 4-3, 4-4, 4-5, 4-6 are arranged parallel to each other in the plane of the directions 5, 5a but spaced apart with a distance 6 from each other parallel to direction 5a. The portion 8 respective the connecting elements 9 tower over the cooling channels 4-1, 4-2, 4-3, 4-4, 4-5, 4-6. The flow direction 14 of the cooling fluid to be provided to the cooling channels 4-1, 4-2, 4-3, 4-4, 4-5, 4-6 is in figure 1 from right to left.

The cooling channels 4-1, 4-2, 4-3, 4-4, 4-5, 4-6 are provided via gas injection technique, GIT, allowing for cooling channels 4-1, 4-2, 4-3, 4-4, 4-5, 4-6 having a small cross section.

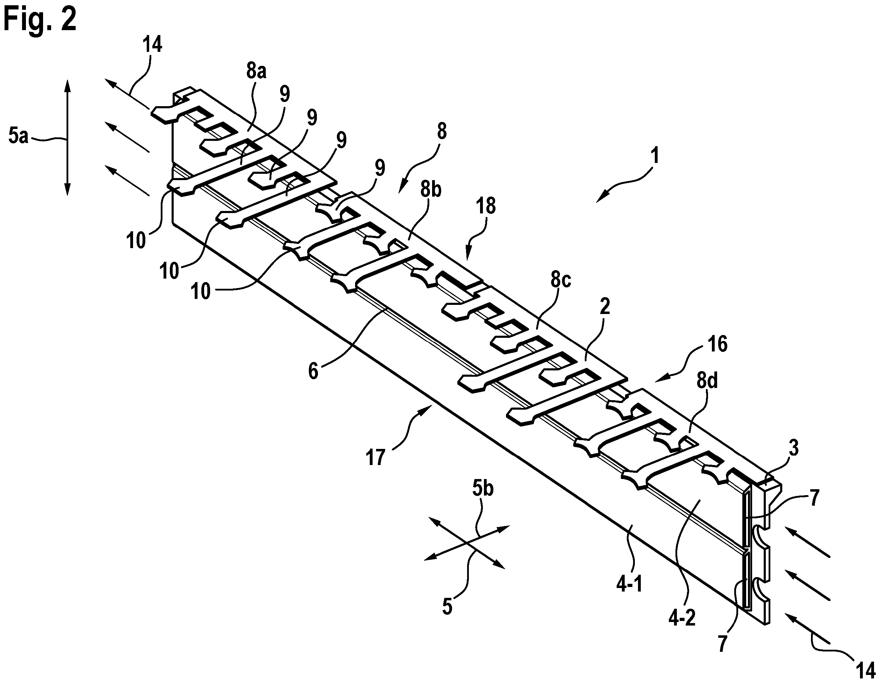

Figure 2 shows a busbar connector according to an embodiment of the present invention.

In detail, figure 2 shows in general a busbar connector 1 according to the busbar connector 1 of figure 1. In contrast to the busbar connector 1 of figure 1, the busbar connector 1 of figure 2 comprises only two cooling channels 4-1, 4-2, however, covering the same area of the electric connector 2 as the six cooling channels 4-1, 4-2, 4-3, 4-4, 4-5, 4-6 of the busbar connector 1 of figure 1.

The cooling channels 4-1, 4-2 are provided via projection injection technique, PIT, allowing for cooling channels 4-1, 4-2 having a larger trapezodial cross section.

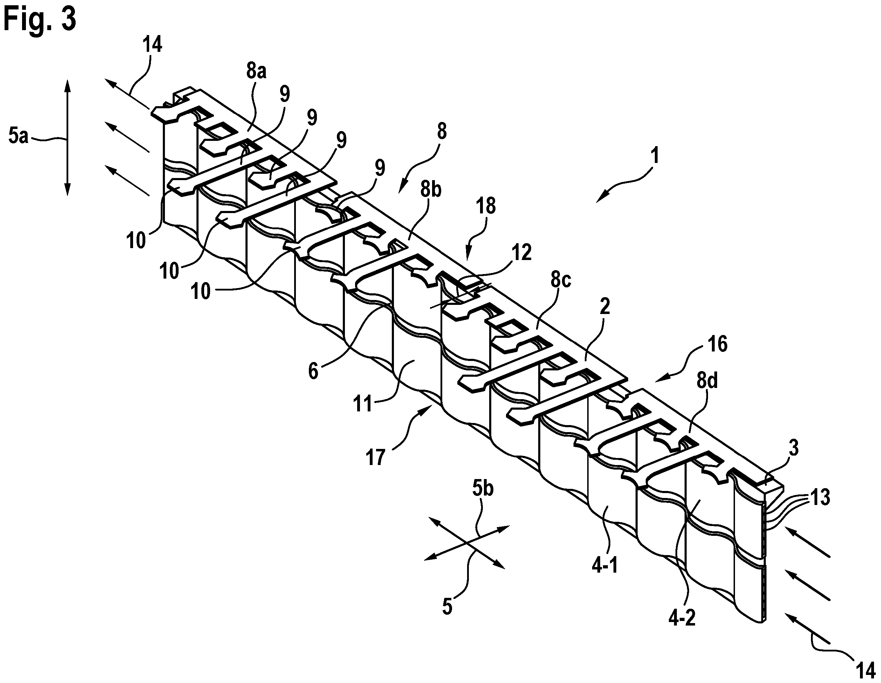

Figure 3 shows a busbar connector according to an embodiment of the present invention.

In detail, figure 3 shows in general a busbar connector 1 according to the busbar connector 1 of figure 2. In contrast to the busbar connector 1 of figure 2, the busbar connector 1 of figure 3 comprises two cooling channels 4-1, 4-2 having a meander-shaped surface 11 providing a periodically varying distance 12 between the cooling channels 4-1, 4-2 and the electric connector 2. Even further, in at least one, in particular in each of the cooling channels 4-1, 4-2 dividers 13 are provided for flow guidance of the cooling fluid, i.e. for facilitating an efficient flow of the cooling liquid or the heating liquid avoiding turbulences.

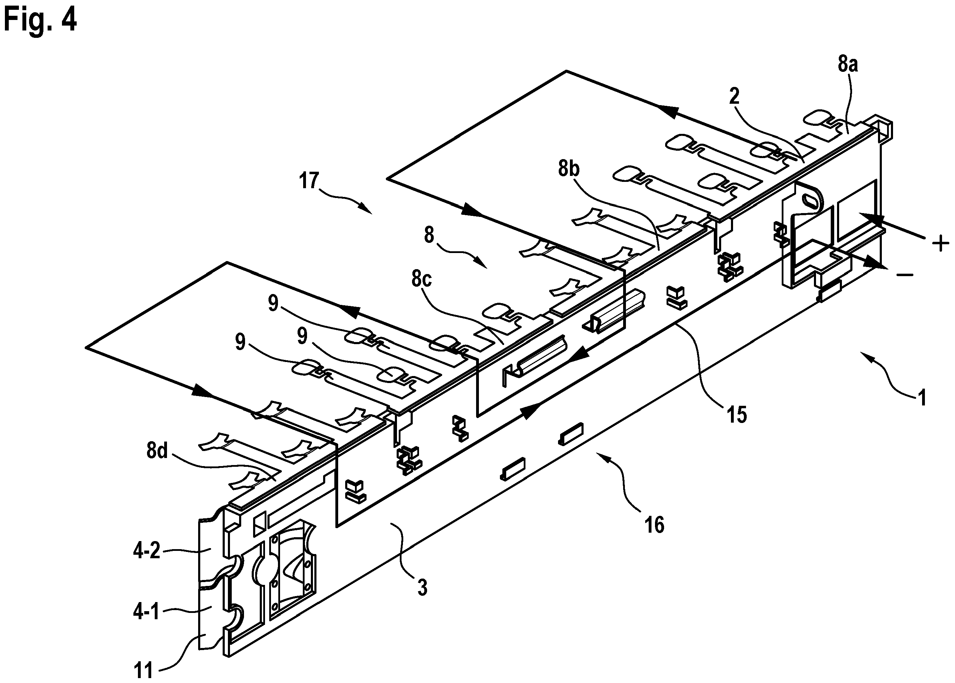

Figure 4 shows a busbar connector according to an embodiment of the present invention.

In figure 4, the backside 16 of the busbar connector 1 according to figure 3 is shown. The backside 16 of the busbar connector 1 comprises electrically insulating material 3 to insulate the busbar connector 1 to the side opposite to the frontside 17 directed to the battery cells 20. Further as shown in figure 4, the busbar connector 1 provides an electric circuit 15 forming a first pole via base 8a to the battery cells (not shown) and back from the battery cells via base 8b to the electric connector 2 and via base 8c to the battery cells (not shown) and back from the battery cells via base 8d to the electric connector 2 providing a second pole of the electric circuit 15.

Figure 5 shows a battery according to an embodiment of the present invention.

Figure 5 shows a battery 100 comprising a rectangular frame 21 with a bottom (not shown) for holding a plurality of battery cells 20. One side of the frame 21 comprises a busbar connector 1, for instance according to figure 3. On top of the frame 21, a cover 22 can be arranged for completely covering the battery cells 20 within the frame 21. The connecting elements 9 therefore protrude into the inside of frame 21.

The busbar connector 1 is connected to a thermal management system 90, such that the thermal management system 90 can provide a heating fluid or a cooling fluid to the channels 4-1, 4-2, 4-3, 4-4, 4-5, 4-6 for heating or cooling of the busbar connector 1 and/or for heating or cooling the battery cells 20. The thermal management system 90 can be connected to a sensor, e.g. a temperature sensor 91 for sensing the temperature of the battery cells 20. Depending on the sensed temperature by the sensor 91, the thermal management system 90 provides a heating fluid or a cooling fluid to the channels 4-1, 4-2, 4-3, 4-4, 4-5, 4-6 of the busbar connector 1.

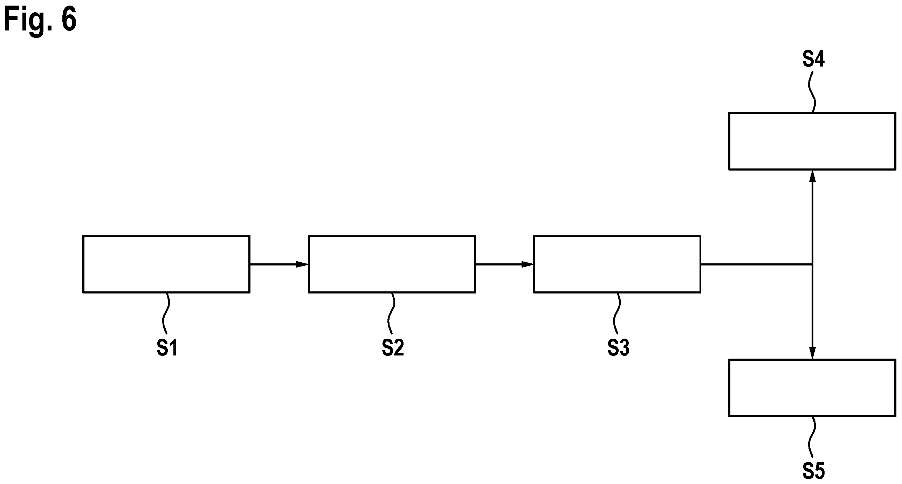

Figure 6 shows steps of a method according to an embodiment of the present invention.

In figure 6 steps of a method for providing a busbar connector 1 for providing one or more electrical connectors 2 within or to a battery module or a battery pack is shown.

The method comprises the steps of:
- Providing S1 at least one electric connector 2 for electrically contacting one or more battery cells 20,
- Providing S2 an electrically insulating material 3 at least partly surrounding said electric connector 2,
- Providing S3 at least one thermal management channel 4-1, 4-2, 4-3, 4-4, 4-5, 4-6 for thermal management of at least one battery cell 20 and/or of said at least one electric connector 2,
   a) by co-extruding S4 said at least one thermal management channel 4-1, 4-2, 4-3, 4-4, 4-5, 4-6 with said electrically insulating material 3 and/or said electric connector 2, and/or
   b) by fluid injection technique S5, in particular gas injection technique, GIT, and/or water injection technique, WIT, and/or by projectile injection technique, PIT.

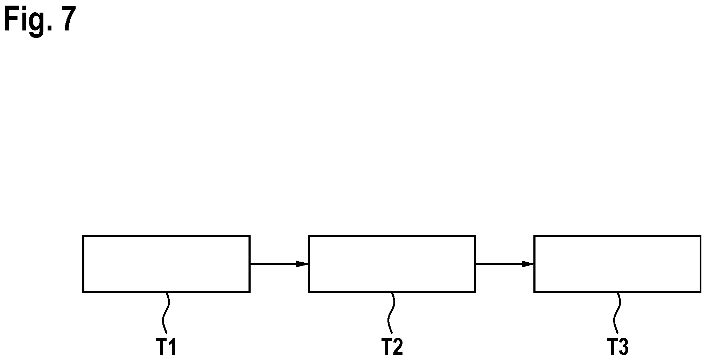

Figure 7 shows steps of a method according to an embodiment of the present invention.

In figure 7 steps of a method for operating a connection system 1, 90, 91 according to claim 13 are shown.

The method comprises the steps of:
- Determining T1 a cooling and/or heating requirement by the thermal management system 90, 91 for said busbar connector 1,
- Determining T2 a volume and/or flow rate and/or temperature of a cooling and/or heating fluid,
- Providing T3 said cooling and/or heating fluid to said at least one thermal management channel 4-1, 4-2, 4-3, 4-4, 4-5, 4-6 of said busbar connector 1.

At least one embodiment may provide at least one of the following features and/or at least one of the following advantages:
- Easy and less cost-intensive manufacturing.
- Reduced construction space.
- Reliable operation.
- High integration level.
- A larger contact area of the surface for the thermal management.
- Flexible and sufficient thermal management.
- Reduced weight.
- Simple and cost-effective manufacturing.

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

### List of reference signs

- 1: Busbar connector
- 2: Electric connector
- 3: Electrically insulating material
- 4-1, 4-2, 4-3, 4-4, 4-5, 4-6: Cooling channels
- 5: Main direction of extension
- 5a: Height
- 5b: Direction of extension of portion
- 6: Distance
- 7: Trapezoidal cross-section
- 8: Portion
- 8a, 8b, 8c, 8d: Base
- 9: Connecting element
- 10: Connection portion
- 11: Meander-shaped surface
- 12: Distance
- 13: Dividers
- 14: Flow direction
- 15: Electric circuit
- 16: Backside
- 17: Frontside
- 18: Upper side

- 20: Battery cell
- 21: Rectangular frame
- 22: Cover
- 90: Thermal management system
- 91: Temperature sensor
- 100: Battery

- S1-S5: Steps of a method
- T1-T3: Steps of a method

## Claims

1. Busbar connector (1) for prividing one or more electrical connections within or to a battery module or a battery pack, the battery module or battery pack comprising one or more battery cells (20), wherein the busbar connector (1) comprises:
- at least one electric connector (2) for electrically contacting one or more battery cells (20),
- an electrically insulating material (3) at least partly surrounding said electric connector (2), and
- at least one thermal management channel (4-1, 4-2, 4-3, 4-4, 4-5, 4-6) for thermal management of at least one battery cell (20) and/or of said at least one electric connector (2),
and wherein said at least one thermal management channel (4-1, 4-2, 4-3, 4-4, 4-5, 4-6) is
a) co-extruded with said electrically insulating material (3) and/or said at least one electric connector (3) and/or
b) provided by a fluid injection technique and/or projectile injection technique, PIT.

2. Busbar connector (1) according to claim 1, **characterized in that** said busbar connector (1) is an elongated element along a main direction of extension (5).

3. Busbar connector (1) according to claim 2, **characterized in that** at least two separate thermal management channels (4-1, 4-2, 4-3, 4-4, 4-5, 4-6) are provided extending along said main direction of extension (5) of the busbar connector (1).

4. Busbar connector (1) according to claim 3, **characterized in that** said at least two separate thermal management channels (4-1, 4-2, 4-3, 4-4, 4-5, 4-6) are spaced apart from each other with a distance (6), in particular perpendicular to a main direction of extension (5) of the busbar connector (1).

5. Busbar connector (1) according to one of the claims 1-4, **characterized in that** said at least one thermal management channel (4-1, 4-2, 4-3, 4-4, 4-5, 4-6) of said at least one electric connector (2) has a rectangular, ellipsoidal, trapezoidal and/or circular cross-section (7).

6. Busbar connector (1) according to one of the claims 1-5, **characterized in that** said at least one electric connector (2) comprises a portion (8), which extends with an angle >0°, preferably perpendicular to the main direction of extension (5b) of the busbar connector (1).

7. Busbar connector (1) according to claim 6, **characterized in that** said portion (8) comprises a plurality of connection elements (9) for electrically connecting one or more battery cells (20).

8. Busbar connector (1) according to claim 7, **characterized in that** at least one of said connection elements (9) is flat, in particular having a connecting portion (10) for contacting a pole of a battery cell (20).

9. Busbar connector (1) according to one of the claims 1-8, **characterized in that** said at least one thermal management channel (4-1, 4-2, 4-3, 4-4, 4-5, 4-6) comprises a meander-shaped surface (11), such that in one spatial direction the distance (12) between said at least one electric connector (2) and said thermal management channel (4-1, 4-2, 4-3, 4-4, 4-5, 4-6,) varies, preferably periodically.

10. Busbar connector (1) according to at least claim 6, **characterized in that** the number of thermal management channels (4-1, 4-2, 4-3, 4-4, 4-5, 4-6) is equal or smaller than the number of connection elements (9).

11. Busbar connector (1) according to one of the claims 1-10, **characterized in that** said at least one thermal management channel (4-1, 4-2, 4-3, 4-4, 4-5, 4-6) comprises one or more dividers (13) for guiding the flow of a thermal management fluid.

12. Method for providing a busbar connector (1) for providing one or more electrical connections within or to a battery module or a battery pack, the battery module or battery pack comprising one or more battery cells (20), said method comprising:
- Providing (S1) at least one electric connector (2) for electrically contacting one or more battery cells (20),
- Providing (S2) an electrically insulating material (3) at least partly surrounding said electric connector (2),
- Providing (S3) at least one thermal management channel (4-1, 4-2, 4-3, 4-4, 4-5, 4-6) for thermal management of at least one battery cell (20) and/or of said at least one electric connector (2),
a) by co-extruding (S4) said at least one thermal management channel (4-1, 4-2, 4-3, 4-4, 4-5, 4-6) with said electrically insulating material (3) and/or said electric connector (2), and/or
b) by fluid injection technique (S5), in particular gas injection technique, GIT, and/or water injection technique, WIT, and/or by projectile injection technique, PIT.

13. Connection system comprising a busbar connector (1) according to one of the claims 1-11 and a thermal management system (90, 91) for thermal management of at least said busbar connector (1), wherein said thermal management system (90, 91) is adapted to provide a cooling fluid and/or a heating fluid to said at least one thermal management channel (4-1, 4-2, 4-3, 4-4, 4-5, 4-6).

14. Battery (100) comprising a plurality of battery cells (20) and a busbar connector (1) according to one of the claims 1-11 and/or a connection system (1, 90, 91) according to claim 13.

15. Method for operating a connection system (1, 90, 91) according to claim 13, comprising the steps of:
- Determining (T1) a cooling and/or heating requirement by the thermal management system (90, 91) for said busbar connector (1),
- Determining (T2) a volume and/or flow rate and/or temperature of a cooling and/or heating fluid,
- Providing (T3) said cooling and/or heating fluid to said at least one thermal management channel (4-1, 4-2, 4-3, 4-4, 4-5, 4-6) of said busbar connector (1).
